# EUROPEAN PATENT APPLICATION

(11) **EP 2 610 139 A1**
(43) Date of publication of application: **03.07.2013**
(21) Application number: 11010258.9
(22) Date of filing: 28.12.2011
(51) Int. Cl.: B62D 5/093

(54) **Hydraulic steering unit**

(71) Applicant: Sauer-Danfoss ApS, 6430 Nordborg (DK)
(72) Inventor: Arbjerg, Niels, 6470 Sydals (DK); Ennemark, Poul, 6400 Soenderborg (DK)
(74) Representative: Knoblauch, Andreas

(57) **Abstract**

A hydraulic steering unit is provided comprising a housing (2), the housing (2) having a supply port arrangement (P, T) and a working port arrangement (L, R), direction valve means between the supply port arrangement (P, T) and the working port arrangement (L, R), the direction valve means having two valve elements (4, 5) being rotatable relative to each other and defining a plurality of variable orifices, the variable orifices being arranged in flow paths between the supply port arrangement (P, T) and the working port arrangement (L, R), and at least one check valve in at least one of said flow paths.

Such a hydraulic steering unit should have a simple construction.

To this end, the check valve (20, 26) is part of one of said valve element (5).

## Description

The invention relates to a hydraulic steering unit comprising a housing, the housing having a supply port arrangement and a working port arrangement, direction valve means between the supply port arrangement and the working port arrangement, the direction valve means having two valve elements being rotatable relative to each other and defining a plurality of variable orifices, the variable orifices being arranged in flow paths between the supply port arrangement and the working port arrangement, and at least one check valve in at least one of said flow paths.

Such a hydraulic steering unit is known from US 5 819 532. As it is known, a radially inner valve element (commonly referred to a as "spool") is arranged within a radially outer valve element (commonly referred to as "sleeve") and the radially outer valve element is arranged in the housing. When a steering wheel is rotated, this rotation is transmitted to the spool. The rotation of the spool relative to the sleeve opens a plurality of orifices so that hydraulic fluid under pressure can flow from a pressure port of the supply port arrangement to a flow meter and from the flow meter to a steering motor via one port of the working port arrangement. Hydraulic fluid coming back from the steering motor flows back to the other port of the working port arrangement and through orifices formed by the two valve elements back to a tank port of the supply port arrangement. The flow meter rotates the sleeve in order to bring the spool and the sleeve in a neutral position relative to each other.

In some cases, it is necessary to use a check valve. Such a check valve allows flow of hydraulic fluid in one direction only and prevents the flow of the hydraulic fluid in the other direction. However, the provision of such a check valve makes the design of the steering unit complicated. In most cases it is necessary to drill an additional bore into the housing and to insert a valve element and a spring into said bore. Thereafter, the bore has to be closed.

A further steering unit of the kind mentioned above is shown in US 4 958 493. In this case the check valve comprises a ball which is held in its bore by means of a holding element.

The task underlying the present invention is to provide for a hydraulic steering unit having a simple construction.

This task is solved with a hydraulic steering unit of the kind mentioned above in that the check valve is part of one of said valve elements.

In this case, there is no need to have a space for the check valve in a part of the housing. The check valve can be arranged at one of said valve elements so that it can be arranged closely to the orifices enabling a simple design of the flow paths.

Preferably, the check valve comprises a strip of spring material, the strip being arranged in a circumferentially extending groove of said valve element and being pre-stressed against the bottom of said groove, wherein at least one throughbore of said valve element opens into said bottom of said groove. Since the strip is pre-stressed against the bottom of the groove, it covers the throughbore and prevents passage of hydraulic fluid from the groove into said throughbore. On the other hand, when hydraulic fluid in the throughbore acts on the strip with a pressure higher than the pressure in the groove, the strip is moved away from the bottom of the groove and therefore opens the throughbore so that hydraulic fluid can escape from the throughbore into the groove. As soon as the pressure in the throughbore decreases and becomes smaller than the pressure in the groove, the check valve is closed again. Such a check valve is of a rather simple construction. The check valve is moved together with the valve element when the valve element is rotated.

Preferably, the spring material is spring steel. A strip of spring steel can be pre-stressed against the bottom of the groove with a force sufficient to close reliably the opening of the through bore into the groove.

In a preferred embodiment the length of said strip in circumferential direction is shorter than the length of the bottom of said groove in circumferential direction. In this case, there is no overlapping of the two ends of the strip so that the strip can be pressed against the bottom of the groove over the entire length of the strip. Furthermore, this embodiment allows for different coefficients of thermal expansion of the strip and of the valve element. Even if the strip expands more in circumferential direction than the valve element when the temperature is raised, there is no risk that the strip is partly lifted from the bottom of the groove.

In this case, it is preferred that movement restriction means are provided limiting a movement of the strip in the groove in circumferential direction. The movement restriction means can be used to secure that the strip covers the opening of the throughbore or, when a plurality of throughbores is provided, the strip covers the openings of all throughbores.

It is preferred that the strip forms a gap between its ends and the movement restriction means comprise a positioning element fixed to said valve element, said positioning element being arranged in said gap and having a length in circumferential direction which is smaller than the length of the gap in circumferential direction. The positioning element allows for a small movement of the strip in circumferential direction. However, this movement is so small that in all positions of the strip the openings of all throughbores are sufficiently covered. Since the gap is larger than the positioning elements in circumferential direction, the strip can thermally expand without being lifted from the bottom of the groove.

Preferably, the positioning element has a width which is greater than the width of the groove, wherein the groove has a holding section adapted to the shape of the positioning element, the positioning element being arranged in said holding section. The holding section has a width which is slightly larger than the width of the remaining groove. When the positioning element is arranged in this slightly enlarged section of the groove, it is held in its position by a positive locking. Furthermore, the positioning element can be pressed into the holding section so that it is held by friction against radial movement. However, in most cases, this friction is not necessary since the valve element is arranged in the housing or in the other valve element so that the positioning element is locked against a radial movement.

Preferably, the strip has a width which is smaller than the width of the groove. When the strip is lifted from the bottom of the groove by the pressure in the throughbore, the hydraulic fluid can escape into a space between the strip and the bottom of the groove. When the width of the groove is larger than the width of the strip, the hydraulic fluid can escape through an axial gap between the strip and a wall of the groove. The relation of the width of the strip and of the groove is chosen so that in any case the openings of the throughbores are covered by the strip.

The strip can be provided with fingers extending in axial direction. These fingers are arranged with a distance in circumferential direction. These fingers are used to secure an axial position of the strip within the groove since they restrict the movement of the strip in axial direction. However, they interrupt the gap between the strip and the wall of the strip only to a minor extend so that the hydraulic fluid can still escape through this gap.

Additionally or alternatively, the groove has two walls, at least one wall having a recess extending in axial direction. This recess is not filled with the strip so that it can be used as an exit for the hydraulic fluid flowing out of the space between the strip and the bottom of the groove.

Preferably, the groove is arranged on the radial outer side of the radial outer valve element. In this case the check valve is part of the sleeve.

Preferably, the check valve cooperates with a throughbore being part of an orifice. In most cases, said orifice is formed by a plurality of throughbores so that the check valve cooperates with said plurality of throughbores. No additional throughbores are necessary to realise the function of the check valve.

A preferred example of the invention will now be described in more detail with reference to the drawing, wherein:
- Fig. 1: is a diagrammatic longitudinal section through a steering unit,
- Fig. 2: is a perspective view of an outer valve element,
- Fig. 3: is an enlarged detail III of Fig. 2,
- Fig. 4: is the view of Fig. 3 showing a strip of spring material,
- Fig. 5: is a modified embodiment of Fig. 4, and
- Fig. 6: is an enlarged section through part of the housing and part of the outer valve element and showing the check valve.

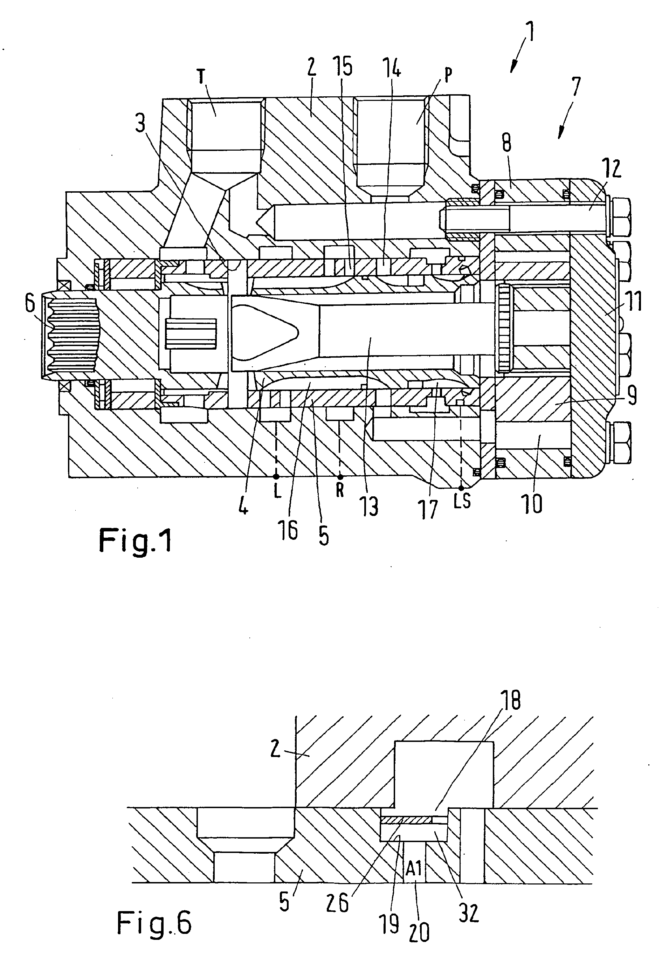

Fig. 1 shows schematically a hydraulic steering unit 1. The steering unit 1 comprises a housing 2. The housing 2 is provided with a pressure port P, a tank port T, and two working ports L, R. The pressure port P and the tank port T together form a supply port arrangement. The two working ports L, R together form a working port arrangement.

The housing 2 comprises a bore 3, in which a direction valve is arranged. The direction valve comprises an inner valve element 4 which is commonly referred to as "spool" and an outer valve element 5 which is commonly referred to as "sleeve". The spool 4 and the sleeve 5 can be rotated relative to each other over a limited angle. The rotation of the spool 4 is effected by means of a steering wheel which can be connected to the spool 4 by means of a coupling 6.

The steering unit 1 furthermore comprises a flow meter 7 which can also be designated as "measuring motor". The flow meter 7 has an outer tooth ring 8 and an inner star 9. Displacement chambers 10 are arranged between the outer tooth ring 8 and the inner star 9. The entire assembly is covered by a cover 11 and held together by bolts 12.

The star 9 is connected to the sleeve 5 by means of a dog bone 13.

The sleeve 5 comprises several throughbores 14, 15 and the spool 4 comprises several grooves 16, 17 extending in axial direction. When the spool 4 is rotated relative to the sleeve 5 the bores 14, 15 together with the grooves 16, 17 form a plurality of orifices establishing a flow path between the pressure port P and one of the working ports L, R and another flow path between the other of the working ports R, L and the tank port T. The operation of such a hydraulic steering unit is basically known. A detailed description is omitted here.

The orifices are usually termed A1-A5.

In some cases, it is necessary to have a flow of hydraulic fluid only in one direction. When for example the flow meter 7 is used as an auxiliary pump in case the pressure at the pressure port P is not sufficient to drive a steering motor connected to the steering unit 1, the flow from the flow meter 7 should flow only to the pressure port P, not to the tank port T.

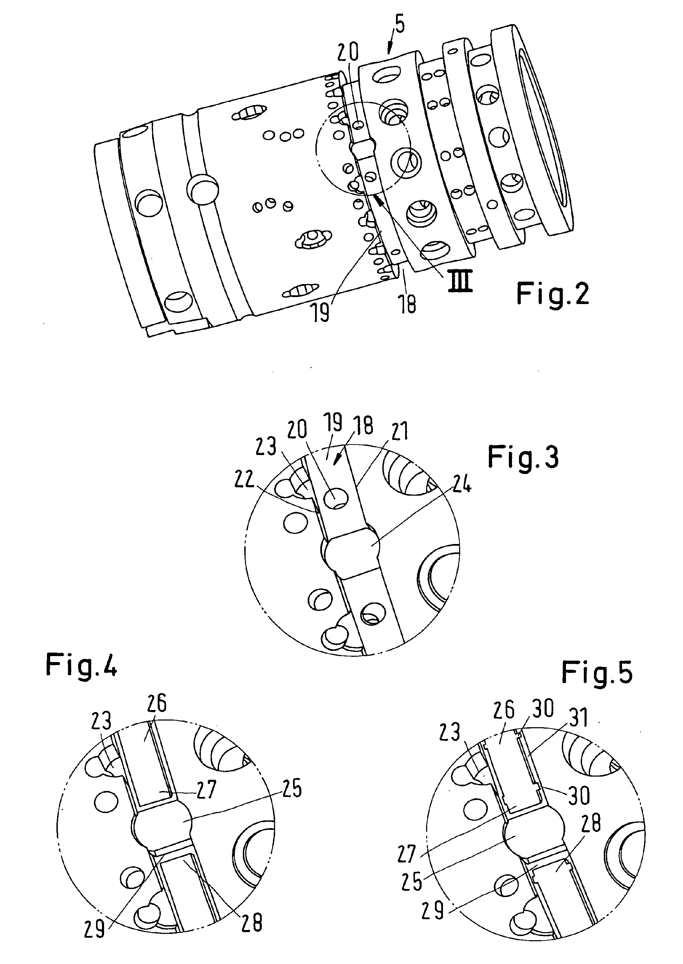

To this end a check valve is provided which is explained in more detail in connection with Figs. 2 to 6.

Fig. 2 shows the sleeve 5. The sleeve 5 is provided with a groove 18 extending in circumferential direction. The groove 18 has a bottom 19 into which open throughbores 20 which in the present case are part of the so-called "A1" orifice, i.e. an orifice in the flow path from the pressure port P to the flow meter 7.

The groove 18 has two side walls 21, 22. One of the side walls 22 has some recesses 23 which are distributed in circumferential direction.

Furthermore, the groove 18 has a holding section 24 having a width which is slightly larger than the width of the remainder of the groove 18. In the present case, the holding section 24 has the shape of a part of a hollow cylinder.

A plug 25 is inserted into the holding section 24. The shape of the plug 25 is adapted to the shape of the holding section 24 so that the plug 25 is held by a positive locking in circumferential direction.

A strip 26 of spring material, in particular of spring steel, is arranged in the groove 18. The strip 26 is pre-stressed against the bottom 19 of the groove, so that the strip 26 is pressed against the bottom 19 of the groove over the entire length of the strip 26. The strip 26 covers the opening of the throughbores 20 preventing fluid in the groove 18 from entering into the throughbores 20. On the other hand, when the pressure in the throughbore 20 is larger than the pressure in the groove 18, the strip 26 is lifted from the bottom 19 of the groove 18 so that hydraulic fluid can escape from the throughbore 20 into the groove 18.

The strip 26 has two ends 27, 28 which have a distance to each other in circumferential direction and form a gap 29. In circumferential direction, the gap 29 is longer than the length of the plug 25.

Therefore, the plug 25 forms a positioning element of a movement restriction means. The plug 25 limits the movement of the strip 26 in circumferential direction so that the strip 26 in any position covers all of the throughbores 20 in the bottom 19 of the groove 18.

The gap 29 allows that the strip 26 has a thermal expansion differing from the thermal expansion of the sleeve 5. There is no risk that the strip 26 is lifted from the bottom 19 when the thermal expansion of the strip 26 is too high.

The fluid escaping through the throughbore 20 when the strip 26 is lifted off the bottom 19 can flow to the recesses 23 and from there back into the groove 18 above the strip 26. The strip 26 has a thickness which is much smaller than the depth of the groove 18.

The strip 26 has a width which is smaller than the width of the groove 18. However, as can be seen in Fig. 6 the strip 26 covers the opening of the throughbore 20 in any axial position. In Fig. 6 the strip 26 is shown in an open condition of the check valve formed by the strip 26 and the throughbore 20.

Another possibility to secure the strip 26 in axial direction within the groove 18 is shown in Fig. 5. In this embodiment the strip 26 is provided with fingers 30 extending axially. The fingers 30 limit the movement of the strip 26 within the groove 18 in axial direction. The fingers 30 are spaced from each other so that a gap 31 is provided between the fingers 30 in circumferential direction. A hydraulic fluid entering a space 32 (Fig. 6) between the strip 26 and the bottom 10 of the groove 18 can escape via this gap 31. The gap 31 can be provided additionally to the recesses 23 in the sleeve.

In Fig. 2 an embodiment is shown in which a groove 18 surrounds the sleeve 5 completely. However, this is not compulsory. When the groove 18 has only the function to form a space for the strip 26 it is generally sufficient when the groove 18 extends over more than 180°. The length of the groove 18 and the length of the strip 26 must be sufficient so that the strip 26 holds on its own pre-stress on the bottom 19.

The steering unit can be used in connection with a priority valve or without a priority valve.

Furthermore, the steering unit can be used in a reaction steering system in which the driver at the steering wheel feels the effect of forces acting on the steered wheels. The steering unit can as well be used in a non-reacting steering system in which the driver does not feel such effects of forces when he touches the steering wheel.

## Claims

1. A hydraulic steering unit (1) comprising a housing (2), the housing (2) having a supply port arrangement (P, T) and a working port arrangement (L, R), direction valve means between the supply port arrangement (P, T) and the working port arrangement (L, R), the direction valve means having two valve elements (4, 5) being rotatable relative to each other and defining a plurality of variable orifices, the variable orifices being arranged in flow paths between the supply port arrangement (P, T) and the working port arrangement (L, R), and at least one check valve in at least one of said flow paths, **characterized in that** the check valve (20, 26) is part of one of said valve elements (4, 5).

2. The steering unit according to claim 1, **characterized in that** the check valve comprises a strip (26) of spring material, the strip (26) being arranged in a circumferentially extending groove (18) of said valve element (5) and being pre-stressed against the bottom (19) of said groove (18), wherein at least one throughbore of said valve element (5) opens into said bottom (19) of said groove (18).

3. The steering unit according to claim 2, **characterized in that** the spring material is spring steel.

4. The steering unit according to claims 2 or 3, **characterized in that** the length of said strip (26) in circumferential direction is shorter than the length of the bottom (19) of said groove (19) in circumferential direction.

5. The steering unit according to claim 4, **characterized in that** movement restriction means are provided limiting a movement of the strip (26) in the groove (18) in circumferential direction.

6. The steering unit according to claim 5, **characterized in that** the strip (26) forms a gap (29) between its ends (27, 28) and the movement restriction means comprises a positioning element (25) fixed to said valve element (5), said positioning element (25) being arranged in said gap (29) and having a length in circumferential direction which is smaller than the length of the gap (29) in circumferential direction.

7. The steering unit according to claim 6, **characterized in that** the positioning element (25) has a width which is greater than the width of the groove (18), wherein the groove (18) has a holding section (24) adapted to the shape of the positioning element (25), the positioning element being arranged in said holding section (24).

8. The steering unit according to any of claims 2 to 7, **characterized in that** the strip (26) has a width which is smaller than the width of the groove (18).

9. The steering unit according to claim 8, **characterized in that** the strip (26) is provided with fingers (30) extending in axial direction.

10. The steering unit according to any of claims 2 to 9, **characterized in that** the groove (18) has two walls (21, 22), at least one wall (22) having at least one recess (23) extending in axial direction.

11. The steering unit according to any of claims 2 to 10, **characterized in that** the groove (18) is arranged on the radial outer side of the radial outer valve element (5).

12. The steering unit according to any of claims 1 to 11, **characterized in that** the check valve cooperates with a throughbore (20) being part of an orifice.
